# EUROPÄISCHE PATENTANMELDUNG

(11) **EP 0 729 992 A2**
(43) Veröffentlichungstag der Anmeldung: **04.09.1996**
(21) Anmeldenummer: 96106159.5
(22) Anmeldetag: 20.02.1991
(51) Int. Cl.: C08G 63/06, C08G 63/78

(54) **Verfahren zur Herstellung von Polyestern auf der Basis von Hydroxycarbonsäuren**

(30) Priorität: 21.02.1990 DE 4005415
(62) Teilanmeldung aus: 91102413.1
(71) Anmelder: BOEHRINGER INGELHEIM KG, D-55216 Ingelheim (DE); BOEHRINGER INGELHEIM INTERNATIONAL GmbH, D-55216 Ingelheim am Rhein (DE)
(72) Erfinder: Buchholz, Berthold, Dr., 55437 Ockenheim (DE)

(57) **Zusammenfassung**

Die vorliegende Erfindung betrifft ein Verfahren zum Herstellen von Polyestern auf der Basis von Hydroxycarbonsäuren, insbesondere auf der Basis von α-Hydroxycarbonsäuren.

## Beschreibung

Die vorliegende Erfindung betrifft ein Verfahren zum Herstellen von Polyestern auf der Basis von Hydroxycarbonsäuren, insbesondere von α- oder β-Hydroxycarbonsäuren bzw. deren Oligomeren gemäß folgendem Reaktionsschema 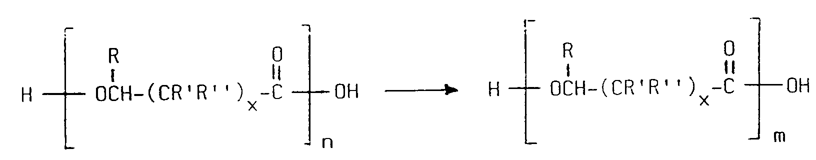 worin R, R' und R'' unabhängig voneinander einen Alkylrest und/oder Wasserstoff, bevorzugt einen Niederalkylrest mit 1-6 C-Atomen und/oder Wasserstoff und besonders bevorzugt eine Methylgruppe und/oder Wasserstoff und
x und m sowie n ganze Zahlen - wobei m > n ist und x auch Null sein kann - bedeuten können.

Alkyl steht im allgemeinen für einen unverzweigten oder verzweigten Kohlenwasserstoffrest mit 1 bis 12 Kohlenstoffatomen, der gegebenenfalls mit einem Halogenatom oder mehreren Halogenatomen - vorzugsweise Fluor - substituiert sein kann, die untereinander gleich oder verschieden sein können, wobei Niederalkylreste bevorzugt sind.

Niederalkyl steht im allgemeinen für einen verzweigten oder unverzweigten Kohlenwasserstoffrest mit 1 bis 4 Kohlenstoffatomen. Als Beispiel seien Methyl, Ethyl, Propyl, Isopropyl, Butyl, Isobutyl, Pentyl, Isopentyl, Neopentyl, Hexyl, Isohexyl, Heptyl, Isoheptyl, Octyl sowie Isooctyl genannt.

Die Umsetzung erfolgt in Gegenwart von reaktionsfördernden Hilfsstoffen (Verknüpfungsreagenzien) der allgemeinen Formel I

R¹-N=C=N-R² (I)

worin
R¹ und R² gleich oder verschieden sein können und einen Alkylrest, einen Cycloalkylrest oder einen Arylrest die gegebenenfalls substituiert sein können, bedeuten können;
oder in Gegenwart von reaktionsfördernden Hilfsstoffen der allgemeinen Formel II 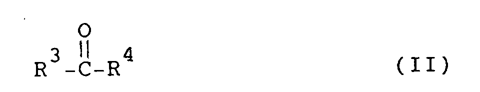 worin
R³ und R⁴ gleich oder verschieden sein können und
einen Alkoxyrest, der gegebenenfalls mit einem oder mehreren Halogenatom(en) substituiert sein kann,
einen 5-, 6- oder 7-gliedrigen Ring, in dem ein oder mehrere Kohlenstoffatom(e) durch ein bzw. mehrere Heteroatom(e) ersetzt sein kann bzw. können und der gegebenenfalls ungesättigt und/oder substituiert sein kann,
oder ein Halogenatom, bevorzugt Chlor
bedeuten können.

Daneben sind als Verknüpfungsreagenzien Sulfonsäurehalogenide vom Typ der allgemeinen Formel (III) 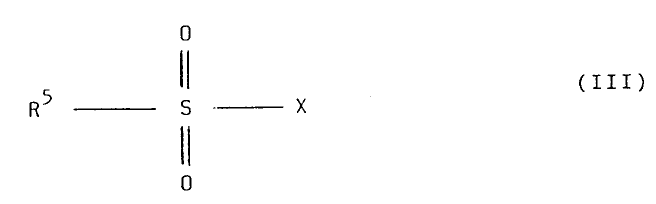 geeignet,
worin R⁵ eine gegebenenfalls substituierte Alkyl- oder Arylgruppe und X ein Halogenatom - bevorzugt Chlor - bedeuten kann. Als Beispiele seien Methansulfonsäurechlorid, Benzolsulfonsäurechlorid und Toluolsulfonsäurechlorid genannt.

Ferner sind als Verknüpfungsreagenzien Carbonate der allgemeinen Formel IV geeignet: 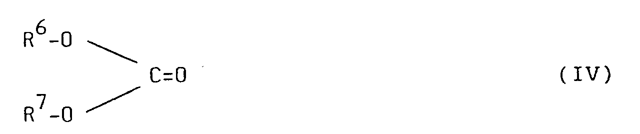 worin R⁶ und R⁷ unabhängig voneinander einen gegebenenfalls substituierten Heteroaryl- oder Aryl-Rest bedeuten können, wobei Verbindungen bevorzugt werden, in denen R⁶ und R⁷ die Bedeutung eines unsubstituierten Pyridinrings besitzen.

Des weiteren eignen sich als Verknüpfungsreagenzien vom Typ V 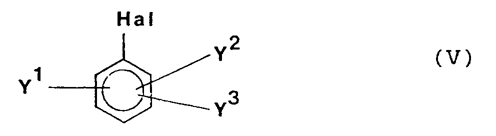 worin Hal ein Halogenatom - bevorzugt Chlor - bedeutet und Y¹, Y² und Y³ gleich oder verschieden sein können und die Bedeutung eines Wasserstoffatoms oder einer Nitrogruppe besitzen können.

Bevorzugt wird unter diesen Verbindungen Pikrylchlorid.

Soweit im einzelnen nicht abweichende Angaben gemacht werden, werden die allgemeinen Definitionen von R¹, R², R³, R⁴ und R⁵ im folgenden Sinn gebraucht:
Alkyl steht im allgemeinen für einen unverzweigten oder verzweigten Kohlenwasserstoffrest mit 1 bis 12 Kohlenstoffatomen, der gegebenenfalls mit einem Halogenatom oder mehreren Halogenatomen - vorzugsweise Chlor - substituiert sein kann, die untereinander gleich oder verschieden sein können, wobei Niederalkylreste bevorzugt sind. Niederalkyl steht im allgemeinen für einen verzweigten oder unverzweigten Kohlenwasserstoffrest mit 1 bis etwa 6 Kohlenstoffatomen. Als Beispiel seien Methyl, Ethyl, Propyl, Isopropyl, Butyl, Isobutyl, Pentyl, Isopentyl, Neopentyl, Hexyl, Isohexyl, Heptyl, Isoheptyl, Octyl sowie Isooctyl genannt.

Cycloalkyl steht im allgemeinen für einen gesättigten oder ungesättigten cyclischen Kohlenwasserstoffrest mit 3 bis 9 Kohlenstoffatomen, der gegebenenfalls mit einem Halogenatom oder mehreren Halogenatomen substituiert sein kann, die untereinander gleich oder verschieden sein können. Bevorzugt sind cyclische Kohlenwasserstoffe mit 5 bis 7 Kohlenstoffatomen wobei der Cyclohexylrest besonders bevorzugt wird. Als Beispiele seinen Cyclopropyl, Cyclobutyl, Cyclopentyl, Cyclopentenyl, Cyclohexyl, Cyclohexenyl, Cycloheptyl, Cycloheptenyl, Cycloheptadienyl und Cyclooctyl, Cyclooctenyl, Cyclooctadienyl, Cyclononinyl genannt.

Aryl steht im allgemeinen für einen aromatischen Rest mit 6 bis 10 Kohlenstoffatomen - auch in Zusammensetzungen, wobei der Aromat mit einer oder mehreren Niederalkylgruppe(n), Alkoxygruppe(n), Nitrogruppe(n), Aminogruppe(n) und/oder einem oder mehreren Halogenatom(en) - untereinander gleich oder verschieden - substituiert sein kann. Bevorzugte Arylreste sind Phenyl, Naphthyl und Biphenyl.

Heteroaryl steht im Rahmen der oben angegebenen Definition im allgemeinen für einen 5- oder 6-gliedrigen Ring, der als Heteroatome Sauerstoff, Schwefel und/oder Stickstoff enthalten kann und an den ein weiterer aromatischer Ring ankondensiert sein kann. Bevorzugt sind 5- und 6-gliedrige aromatische Ringe, die ein Sauerstoff-, ein Schwefel- und/oder ein oder zwei Stickstoffatom(e) enthalten und die gegebenenfalls benzokondensiert sind. Als besondere Heteroarylreste seien beispielsweise Thienyl, Furyl, Pyridyl, Pyrimidyl, Pyrazinyl, Pyridazinyl, Chinolyl, Isochinolyl, Chinazolyl, Chinoxalyl, Thiazolyl, Benzothiazolyl, Isothiazolyl, Oxazolyl, Benzoxazolyl, Isoxazolyl, Imidazolyl, Benzimidazolyl, Pyrazolyl und Indolyl genannt, worunter Pyridyl ganz besonders bevorzugt wird.

Alkoxy steht im allgemeinen für einen über ein Sauerstoffatom gebundenen geradkettigen oder verzweigten gesättigten oder ungesättigten Kohlenwasserstoffrest mit 1 bis 12 Kohlenstoffatomen. Bevorzugt ist ein Niederalkoxyrest mit 1 bis 4 Kohlenstoffatomen, wobei der Alkoxyrest mit einem - bevorzugt mehreren - Halogenatome(n) - bevorzugt Chlor - substituiert. Als Beispiele seien Methoxy, Ethoxy, Propoxy, Isopropoxy, Butoxy, Isobutoxy, tert.-Butoxy, Pentoxy, Isopentoxy, Hexoxy, Isohexoxy, Heptoxy, Isoheptoxy, Octoxy oder Isooctoxy bzw. Allyloxy, Methylvinyloxy genannt.

Als weitere geeignete reaktionsfördernde Hilfsstoffe kommen Substanzen in Betracht, wie sie z.B. in R.C. Larock, Comprehensive Organic Transformations - A Guide to Functional Group Preparations-VCH-Verlagsgesellschaft Weinheim 1989 S. 941 ff. und S. 966 aufgeführt sind.

Als reaktionsfördernde Hilfsstoffe sind neben Phosgen und Diphosgen folgende Substanzen besonders wertvoll: Dicyclohexylcarbodiimid (DCC) Bis(trichlormethyl)carbonat (Triphosgen) und Carbonyldiimidazol (CDI).

Als Acylierungskatalysatoren finden Pyridin bzw. Pyridinderivate Verwendung, wobei Pyridin bzw. Dialkylaminopyridine, wie sie aus der Literatur bekannt sind [G. Höfle, W. Steglich und H. Vorbrüggen, Angew. Chem. 90 (1978) 602] bevorzugt werden. Besonders bevorzugt werden dabei Pyridin und 4-Dialkylaminopyridine eingesetzt. Als besonders wertvoll erweisen sich dabei Pyridin und 4-Dimethylaminopyridin und 4-Pyrrolidinopiperidin [W. Steglich und G. Höfle, Angew. Chem. 81 (1969) 1001] sowie 4-Piperidinopyridin.

Für die Herstellung von Polyestern auf der Basis von Hydroxycarbonsäuren, insbesondere von α- bzw. β-Hydroxycarbonsäuren - speziell von Milchsäure und/oder Glykolsäure - sind prinzipiell zwei Verfahren bekannt:
Zunächst besteht die Möglichkeit, die entsprechende(n) Hydroxycarbonsäure(n) entweder in der Schmelze bei erhöhter Temperatur und vermindertem Druck oder in einem geeigneten Lösungsmittel - unter azeotropen Abdestillieren des bei der Kondensationsreaktion entstehenden Reaktionswassers - umzusetzen.

Auf dem Wege derartiger Polykondensationsreaktionen sind jedoch lediglich Polyester mit einem geringen Molekulargewicht zugänglich [C.H. Holten, Lactic Acid, Verlag Chemie, Weinheim 1971. S. 225 ff].

Unter Anwendung der azeotropen Destillation können ebenfalls nur Molekulargewichte von ca. 10.000 erreicht werden [D.L. Wise. T.D. Fellmann, J.E. Sanderson und R.L. Wentworth in G. Gregoriadis (Hrsg.) Drug Carriers in Medicine, Academic Press, London 1979 S. 241 ff und Zit. Lit.], wobei das erreichbare Molekulargewicht bei Polykondensationsreaktionen von Milchsäure bzw. Glykolsäure signifikant vom Grad der Dehydratation (Grad der Entwässerung) abhängt. So erfordert ein Molgewicht von ca. 10.000 einen Dehydrationsgrad von > 99,28 % [E.M. Filachione und C.H. Fischer, Ind. Eng. Chem. 36 (1944) 223].

Neuere Dehydrationsverfahren sollen dagegen die Herstellung von Polymeren mit einem Molekulargewicht von ca. 35.000 erlauben [EP 171 907].

Weiterhin sollen unter Anwendung von Kondensationskatalysatoren höhere Molekulargewichte erzielbar sein. So sollen Polymere bzw. Copolymere der Milch- bzw. der Glykolsäure mit einem Molekulargewicht bis ca. 30.000 unter Verwendung von anorganischen Säurekatalysatoren herstellbar sein [EP 172 636].

Der Einsatz von Ionenaustauschern als Kondensationskatalysatoren soll die Herstellung von Polymeren mit einem Molekulargewicht von ca. 35.000 ermöglichen [EP 26 599].

Der zweite Zugang zu derartigen Polyestern besteht in der ringöffnenden Polymerisation der entsprechenden Lactide (Dilactone). Bislang sind lediglich auf diesem Wege Polymere bzw. Copolymere mit einem Molekulargewicht von MW > 35.000 herstellbar.

Der Nachteil derartiger Polymerisationsverfahren besteht jedoch darin, daß Rückstände der als Katalysatoren zugesetzten Metallverbindungen (vorzugsweise Zinn- bzw. Zinkverbindungen) durch einen nachgeschalteten Reinigungsschritt entfernt werden müssen, welcher - in Abhängigkeit davon, wieviel an Katalysatorresten im Hinblick auf das geplante Einsatzgebiet tolerierbar ist - unter Umständen sehr aufwendig sein kann [EP 270 987].

Aufgabe der vorliegenden Erfindung ist es daher, ein Verfahren zur Herstellung von Polyestern auf der Basis von Hydroxycarbonsäuren, insbesondere von α- bzw. β-Hydroxycarbonsäuren zur Verfügung zu stellen, welches die Herstellung derartiger Polyester mit einem hohen Molekulargewicht erlaubt.

Es ist eine weitere Aufgabe der vorliegenden Erfindung, ein Verfahren zur Verfügung zu stellen. welches die Herstellung von Polyestern erlaubt, die keine Katalysatorrückstände - insbesondere keine Rückstände von Metallverbindungen - aufweisen.

Es ist zudem eine Aufgabe der vorliegenden Erfindung, ein Verfahren zur Herstellung der erfindungsgemäßen Polyester zur Verfügung zu stellen, welches die Variation der jeweils angestrebten Molmassen in möglichst weiten Grenzen erlaubt.

Es ist eine weitere Aufgabe der vorliegenden Erfindung, ein Verfahren zur Verfügung zu stellen, welches die Herstellung der erfindungsgemäßen Polyester als sog. "Random"- und/oder Blockpolymere bzw. -copolymere ermöglicht.

Erfindungsgemäß werden diese Aufgaben dadurch gelöst, daß man die entsprechenden Hydroxycarbonsäuren bzw. deren Oligomeren in Anwesenheit der genannten reaktionsfördernden Hilfsstoffen (Verknüpfungsreagenzien), und gegebenenfalls in Gegenwart eines Acylierungskatalysators des angegebenen Typs einer Polykondensationsreaktion unterwirft. - Die Verwendung von Verknüpfungsreagenzien - wie z.B. CDI, Triphosgen oder Dicyclohexylcarbodiimid - bei Veresterungsreaktionen ist an und für sich aus dem Stand der Technik bekannt [J. March, Advanced Organic Chemistry, 3^{rd} Ed., John Wiley and Sons, New York 1985, S. 348 ff. und zit. Lit.; B.C. Larock, Comprehensive Organic Transformations, VCH-Verlagsgesellschaft, Weinheim 1989, S. 941 ff und S. 966 ff; J.M. Panayotov, N. Belcheva und C. Tsetanov, "Preparations of polyesters from aliphatic dicarboxylic acids and diols under mild conditions", Makromol. Chem. 188 (1987) 2821].

Die Polykondensationsreaktion selbst kann dabei in der Schmelze oder in einem inerten Lösungsmittel durchgeführt werden, welches den Reaktionsverlauf nicht nachteilig beeinflußt. Als Lösungsmittel eignen sich beispielsweise diejenigen Lösungsmittel, die bei Polykondensationsreaktionen üblicherweise eingesetzt werden, wozu unter anderem halogenierte Kohlenwasserstoffe - wie z.B. Dichlormethan oder Trichlormethan - oder Ether - wie z.B. Tetrahydrofuran - gehören.

Die gewünschte Molmasse kann durch Variation der Reaktionsbedingungen - Temperatur, Reaktionszeit, Mol-Verhältnis von Monomer bzw. Oligomer zu Transacylierungskatalysator sowie insbesondere von Hilfsstoff bzw. Verknüpfungsreagenz zu Monomer bzw. Oligomer - gesteuert werden.

Ist man zum Beispiel an einem möglichst hohen Molekulargewicht des erfindungsgemäßen Polykondensationsproduktes interessiert, wird der Einsatz einer mindestens stöchiometrischen Mengen an Verknüpfungsreagenz erforderlich. Daneben kann je nach Reinheitsgrad - insbesondere Feuchtigkeitsgehalt - der eingesetzten Edukte ein Überschuß an Verknüpfungsreagenz - im Vergleich zum Einsatz entsprechend reinerer Ausgangsstoffe - notwendig werden.

Werden Verknüpfungsreagenzien der allgemeinen Formel I eingesetzt, worin R¹ und/oder R² die Bedeutung von Halogen - insbesondere Chlor oder Trichlormethoxy - besitzen - beispielsweise Phosgen oder Chlorameisensäureester oder aber Triphosgen - ist es zum Abfangen des während der Reaktion entstehenden Halogenwasserstoffes vorteilhaft, der Reaktionsmischung eine Base, vorzugsweise ein Amin - wie z.B. Triethylamin oder Pyridin - zuzusetzen.

Die Reinigung des Polykondensationsproduktes (insbesondere das Abtrennen von niedermolekularen Reaktionsprodukten oder umgesetzten Edukten sowie von Verknüpfungsreagenz) erfolgt nach den aus dem Stand der Technik bekannten Reinigungsverfahren.

In Abhängigkeit von der Art des erhaltenen Polykondensationsproduktes können dabei entweder Extraktions- oder Umfällverfahren eingesetzt werden.

Als Edukte werden Hydroxycarbonsäuren - insbesondere α- oder β-Hydroxycarbonsäuren gleicher oder verschiedener Konstitution - wie z.B. L-Milchsäure, D-Milchsäure, Mischungen von D- und L-Milchsäure und Glykolsäure - bzw. deren Oligomere und Co-Oligomere - eingesetzt.

Bei der Auswahl der Edukte bzw. der Präpolymere kann der Kondensationsgrad (Polymerisationsgrad) in weiten Bereichen variiert werden und zwischen 1 und ca. 1000 liegen. Bevorzugt wird ein Kondensationsgrad zwischen 10 und 100.

Neben Homopolymeren und statistischen Copolykondensationsprodukten sind unter Anwendung des erfindungsgemäßen Verfahrens durch den Einsatz verschiedener Präpolymere auch Blockpolymerisate zugänglich, wie z.B. Di- oder Triblockpolymerisate oder Multiblockpolymerisate.

Als Beispiele seien Multiblockpolymere aus L-Laktid und D,L-Laktid und/oder D-Laktid genannt.

Bei den erfindungsgemäß hergestellten Blockpolymeren kann somit durch die entsprechende Wahl des Polymerisationsgrades der Edukte Einfluß auf die Länge des entsprechenden Blocks im resultierenden Copolymerisat genommen werden. Mit dieser Maßnahme kann Einfluß auf die Charakteristika des Polykondensationsproduktes genommen werden. Durch Endgruppenmodifizierung d.h. durch Blockieren der terminalen Hydroxyl- bzw. der terminalen Carboxylgruppe der Präpolymere wird ebenfalls die Möglichkeit eröffnet, Diblock-Polykondensationsprodukte herzustellen.

Gegenüber den aus dem Stand der Technik bekannten Verfahren unterscheidet sich das erfindungsgemäße Verfahren dadurch, daß Polykondensationsprodukte mit höheren Molekulargewichten herstellbar sind, womit Polymere zugänglich gemacht werden, die sonst nur auf dem Wege der ringöffnenden Polymerisation herstellbar sind. Gegenüber der ringöffnenden Polymerisation besitzt jedoch das erfindungsgemäße Verfahren denjenigen Vorteil, daß es eine wesentlich einfachere und somit wirtschaftlichere Methode zum Entfernen des Verknüpfungsreagenz ermöglicht. So kann z.B. bei der Verwendung von Dicyclohexylcarbodiimid als Verknüpfungsreagenz der im Lauf der Reaktion gebildete Dicyclohexylharnstoff zum größten Teil aus der Reaktionsmischung durch Filtration entfernt werden, da dieses Harnstoff-Derivat in den genannten Lösungsmitteln unlöslich ist.

Das Reaktionsprodukt ist somit vollkommen frei von Metallverbindungen.

Außerdem ist das erfindungsgemäße Verfahren a priori denjenigen, welche auf der Polymerisation von Lactiden basieren, überlegen, da die Oligomeren (aus denen die zur Durchführung der Polymerisation benötigten Lactide erst hergestellt werden müssen) in dem erfindungsgemäßen Verfahren direkt als Edukte eingesetzt werden können.

Ferner ermöglicht das erfindungsgemäße Verfahren die Herstellung von "random"-Polykondensaten, in denen tatsächlich eine statistische Verteilung beispielsweise der Milchsäure- und Glykolsäureeinheiten vorliegt, während bei der Polymerisation beispielsweise von Glycolid und Lactid aufgrund der höheren Rektivität des Glycolids, die Gefahr besteht, daß in dem Polymerisat - unerwünschterweise - Glycolid-Blöcke auftreten können.

Die nachfolgenden Beispiele sollen das erfindungsgemäße Verfahren erläutern:

### Vorbemerkungen

Sämtliche in den Beispielen angegebenen Viskositäten wurden in 0.1 %iger Lösung in Chloroform bei 25 Grad Celsius ermittelt.

### Beispiel 1

In einem 100 ml Rundkolben werden 2.73 g Poly(L-lactid) einer inhärenten Viskosität von 0.12 dl/g in 50 ml Dichlormethan gelöst. Die Lösung wird nacheinander mit 1.4 ml Triethylamin und 122 mg 4-Dimethylaminopyridin versetzt und anschließend auf 0°C abgekühlt. Nach Zugabe von 297 mg Bis(trichlormethyl)carbonat wird 3 Stunden bei 0°C und anschließend weitere 18 Stunden bei Raumtemperatur gerührt. Das Polymer wird mit 300 ml Methanol ausgefällt, mit Methanol nachgewaschen und bei 40°C getrocknet. Die inhärente Viskosität des ausgefällten Polymeren beträgt 0.49 dl/g.

### Beispiel 2

In einem 100 ml Rundkolben werden 3.57 g Poly(L-lactid) einer inhärenten Viskosität von 0.12 dl/g in 30 ml Trichlormethan gelöst. Bei Zusatz von 1.00 g Carbonyldiimidazol setzt sofort eine Gasentwicklung ein. Der Reaktionsansatz wird 15 Minuten bei Raumtemperatur gerührt und anschließend 1 Stunde unter Rückfluß erhitzt. Nach Zusatz von weiteren 500 mg Carbonyldiimidazol läßt man weitere 5 Stunden bei Rückflußtemperatur reagieren. Aus der abgekühlten Reaktionslösung wird das Polymer mit 500 ml Methanol ausgefällt. Die inhärente Viskosität des Polymeren beträgt 0.16 dl/g.

### Beispiel 3

In einem 100 ml Rundkolben werden 3.57 g Poly(L-lactid) einer inhärenten Viskosität von 0.12 dl/g in 40 ml Trichlormethan gelöst. Die Lösung wird mit 811 mg Carbonyldiimidazol versetzt und 1 Stunde bei Raumtemperatur gerührt. Nach Zugabe von 37 mg 4-Dimethylaminopyridin läßt man weitere 3 Stunden bei Raumtemperatur reagieren. Das Polymer wird anschließend mit 800 ml Methanol ausgefällt, mit Methanol nachgewaschen und bei 30°C getrocknet. Die inhärente Viskosität des Polymeren beträgt 0.17 dl/g.

### Beispiel 4

In einem 100 ml Rundkolben werden 7.14 g Poly(L-lactid) einer inhärenten Viskosität von 0.12 dl/g bei 160°C aufgeschmolzen. Unter Rühren werden nacheinander 61 mg 4-Dimethylaminopyridin und 1.14 g Dicyclohexylcarbodiimid portionsweise zugegeben. Die Reaktionsmischung wird 7 Minuten bei auf einer Temperatur von 160°C gehalten und anschließend auf Raumtemperatur abgekühlt. Die inhärente Viskosität des ungereinigten Polymeren beträgt 0.15 dl/g.

### Beispiel 5

7.14 g Poly(L-lactid) einer inhärenten Viskosität von 0.12 dl/g werden in 20 ml Dichlormethan gelöst. Nach Zusatz von 61 mg 4-Dimethylaminopyridin wird eine Lösung von 1.14 g Dicyclohexylcarbodiimid in 10 ml Dichlormethan langsam zugetropft. Nach kurzer Zeit wird die Reaktionslösung trübe und viskoser. Der Ansatz wird 3 Stunden bei Raumtemperatur gerührt, mit 20 ml Dichlormethan verdünnt und abgesaugt. Das Polymer wird aus dem Filtrat mit 400 ml Methanol ausgefällt, mit Methanol nachgewaschen und getrocknet. Die inhärente Viskosität des ausgefällten Polymeren beträgt 0.97 dl/g.

### Beispiele 6-12

Synthese verschiedener Homo- und Copolymerer der Milchsäure durch Umsetzung mit Dicyclohexylcarbodiimid (DCC) in Gegenwart von 4-Dimethylaminopyridin (4-DMAP) in Dichlormethan:

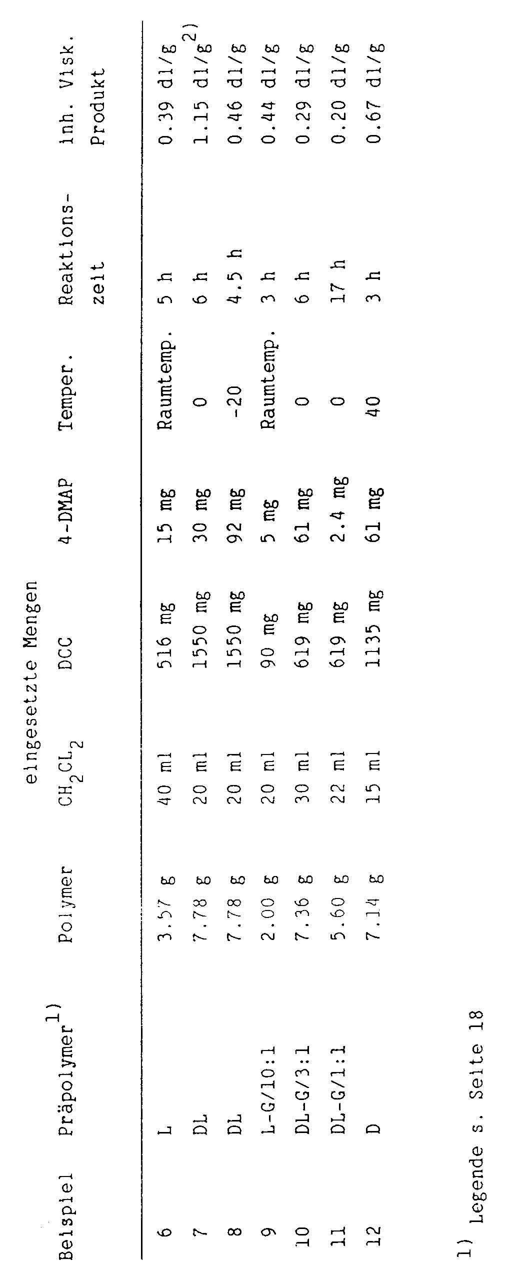

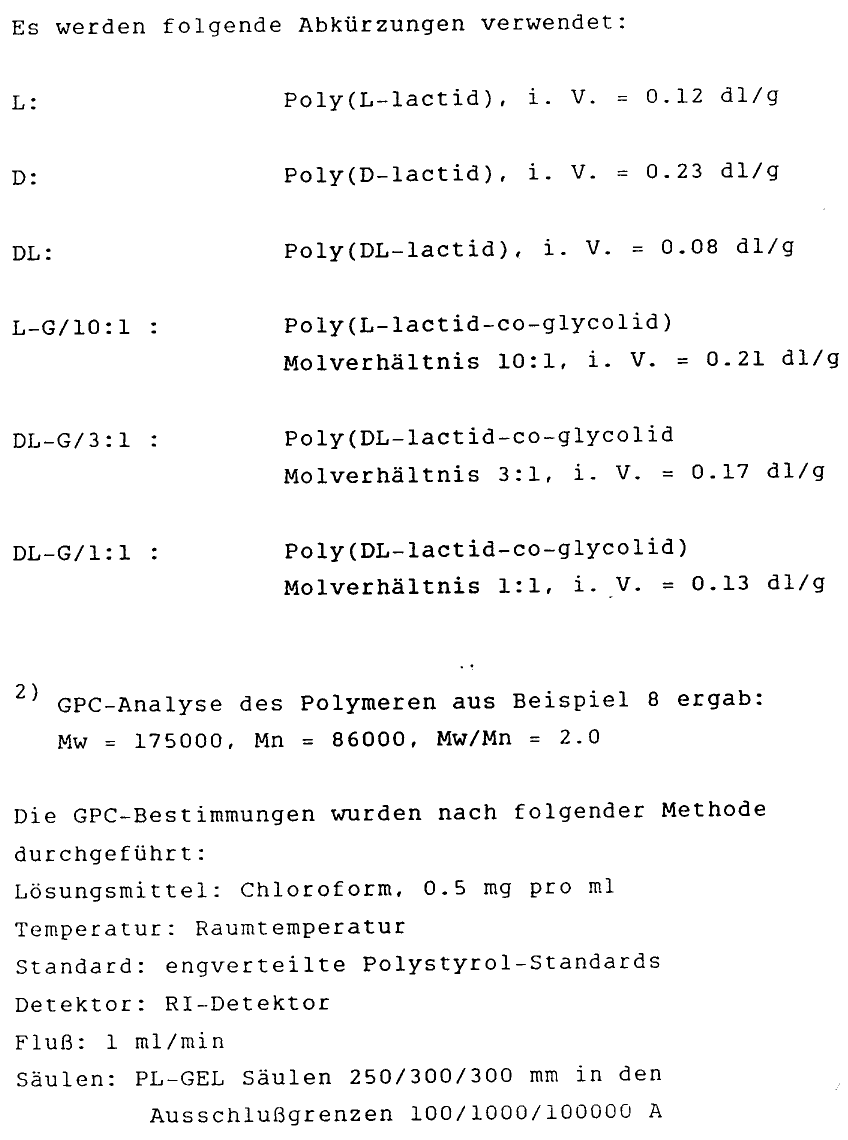

### Beispiel 13

7.14 g Poly(L-lactid) einer inhärenten Viskosität von 0.12 dl/g werden in 20 ml Dichlormethan gelöst. Nacheinander werden 10 ml einer Lösung von 40 mg Pyridin pro 100 ml Dichlormethan und 20 ml einer Lösung von 5.67 g Dicyclohexylcarbodiimid pro 100 ml Dichlormethan zugetropft. Die Mischung wird drei Stunden bei Raumtemperatur gerührt und anschließend abgesaugt. Das Polymer wird aus dem Filtrat mit Methanol ausgefällt, mit Methanol nachgewaschen und getrocknet. Die inhärente Viskosität des Polymeren beträgt 0.20 dl/g.

### Beispiel 14

Die Versuchsdurchführung erfolgt entsprechend Beispiel 7 in 0.4-facher Ansatzgröße. Abweichend hierzu werden anstelle von 4-Dimethylaminopyridin 14.8 mg 4-Pyrrolidino-pyridin als Katalysator verwendet. Die inhärente Viskosität des ausgefällten Polymeren beträgt 0.77 dl/g.

### Beispiel 15

Die Versuchsdurchführung erfolgt entsprechend Beispiel 7 in 0.4-facher Ansatzgröße. Abweichend hierzu werden anstelle von 4-Dimethylaminopyridin 16.2 mg 4-Piperidino-pyridin als Katalysator verwendet. Die inhärente Viskosität des ausgefällten Polymeren beträgt 0.96 dl/g.

### Beispiel 16

7.78 g Poly(DL-lactid) einer inhärenten Viskosität von 0.08 dl/g werden in 20 ml Tetrahydrofuran gelöst. Nach Zugabe von 30.5 mg 4-Dimethylaminopyridin wird die Lösung auf 0°C abgekühlt und 1.55 g Dicyclohexylcarbodiimid portionsweise zugegeben. Der Reaktionsansatz wird 3 Stunden bei 0°C gerührt, mit 20 ml Tetrahydrofuran verdünnt und in 1200 ml Methanol eingetropft. Das ausgefallene Polymer wird getrocknet. Die inhärente Viskosität des Polymeren beträgt 0.55 dl/g.

### Beispiel 17

8.92 g Poly(DL-lactid) einer inhärenten Viskosität von 0.09 dl/g werden in 20 ml Toluol gelöst. Nach Zugabe von 30.5 mg Dimethylaminopyridin wird die Lösung auf 0°C abgekühlt und 1.55 g Dicyclohexylcarbodiimid portionsweise zugegeben. Der Reaktionssatz wird 6 Stunden bei 0°C gerührt, mit 40 ml Toluol verdünnt und abgesaugt. Das Polymer wird durch Eintropfen der Lösung in 1200 ml Methanol ausgefällt und getrocknet. Die inhärente Viskosität des Polymeren beträgt 1.00 dl/g.

### Beispiel 18

5.23 g Poly(DL-lactid-co-glycolid), Molverhältnis 50/50, mit einer inhärenten Viskosität von 0.12 dl/g werden analog Beispiel 17 mit 619 mg Diclyclohexylcarbodiimid, 2.4 mg Dimethylaminopyridin in 30 ml Dichlormethan 6 Stunden bei Raumtemperatur umgesetzt. Die inhärente Viskosität des isolierten Polymeren beträgt 0.67 dl/g.

### Beispiel 19

### (AB)X - Multiblockpolymer, A = L-Lactid, B = DL-Lactid, A:B = 47:53

1.55 g Poly(DL-lactid) einer inhärenten Viskosität von 0.08 dl/g und 1.36 g Poly(L-lactid) einer inhärenten Viskosität von 0.12 dl/g werden unter Zusatz von 12 mg Dimethylaminopyridin, 619 mg Dicyclohexylcarbodiimid und 10 ml Dichlormethan zu einem Copolymeren mit einer inhärenten Viskosität von 0.85 dl/g verknüpft. Die weiteren Reaktionsbedingungen entsprechen Beispiel 7. Das Polymer weist einen Schmelzpunkt von 143°C auf (Peakmaximum im DSC bei einer Aufheizrate von 5 K/min).

### Beispiel 20

### (AB)X - Multiblockpolymer, A = L-Lactid, B = D-Lactid, A:B = 40:60

Durch Reaktion von 1.36 g Poly(L-lactid) einer inhärenten Viskosität von 0.12 dl/g mit 2.03 g Poly(D-lactid) einer inhärenten Viskosität von 0.23 dl/g in 20 ml Dichlormethan (Reaktionsbedingungen entsprechend Beispiel 19) wird ein Copolymer mit einer inhärenten Viskosität von 1.00 dl/g synthetisiert. Das Polymer weist einen Schmelzpunkt von 195°C auf (Peakmaximum im DSC bei einer Aufheizrate von 5 K/min).

## Patentansprüche

1. Verfahren zum Herstellen von Polyestern auf der Basis von Hydroxycarbonsäuren gemäß folgendem Reaktionsschema 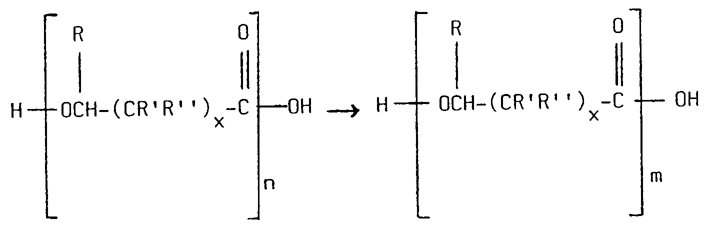 - worin R, R' und R'' unabhängig voneinander einen Alkylrest und/oder Wasserstoff und
x und m sowie n ganze Zahlen - wobei m > n ist und x auch Null sein kann-
bedeuten können - dadurch gekennzeichnet, daß die Kondensationsreaktion in Gegenwart eines Verknüpfungsreagenzes durchgeführt wird.

2. Verfahren nach Anspruch 1, dadurch gekennzeichnet, daß als Verknüpfungsreagenz eine Verbindung der allgemeinen Formel I
R¹-N=C=N-R² (I)
- worin
R¹ und R² gleich oder verschieden sein können und einen Alkylrest, einen Cycloalkylrest oder einen Arylrest die gegebenenfalls substituiert sein können, bedeuten können - eingesetzt wird.

3. Verfahren nach Anspruch 1 oder 2, dadurch gekennzeichnet, daß als Verknüpfungsreagenz Dicyclohexylcarbodiimid (DDC) eingesetzt wird.

4. Verfahren nach einem der Ansprüche 1 bis 3, dadurch gekennzeichnet, daß die Umsetzung in Gegenwart eines Acylierungskatalysators erfolgt.

5. Verfahren nach Anspruch 4, dadurch gekennzeichnet, daß als Acylierungskatalysator ein 4-Dialkylaminopyridin eingesetzt wird.

6. Verfahren nach Anspruch 5, dadurch gekennzeichnet, daß 4-Dimethylaminopyridin als Acylierungskatalysator eingesetzt wird.

7. Verfahren nach Anspruch 5, dadurch gekennzeichnet, daß 4-Piperidinopyridin als Acylierungskatalysator eingesetzt wird.

8. Verfahren nach Anspruch 5, dadurch gekennzeichnet, daß 4-Pyrrolidinopyridin als Acylierungskatalysator eingesetzt wird.

9. Verfahren nach einem der Ansprüche 1 bis 8, dadurch gekennzeichnet, daß α-Hydroxycarbonsäuren und/oder deren Oligomere eingesetzt werden.

10. Verfahren nach einem der Ansprüche 1 bis 8, dadurch gekennzeichnet, daß β-Hydroxycarbonsäuren und/oder deren Oligomere eingesetzt werden.

11. Verfahren nach einem der Ansprüche 1 bis 8, dadurch gekennzeichnet, daß α- und β-Hydroxycarbonsäuren und/oder deren Oligomere eingesetzt werden.

12. Verfahren nach einem der Ansprüche 1 bis 8, dadurch gekennzeichnet, daß Glykolsäure und/oder deren Oligomere eingesetzt werden.

13. Verfahren nach einem der Ansprüche 1 bis 8, dadurch gekennzeichnet, daß Milchsäure in Form von D- und/oder L-Milchsäure und/oder deren Oligomere eingesetzt wird.

14. Verfahren nach einem der Ansprüche 1 bis 8, dadurch gekennzeichnet, daß Glykolsäure und Milchsäure in Form von D- und/oder L-Milchsäure und/oder deren Oligomere eingesetzt werden.

15. Verwendung der in den Ansprüchen 1 bis 3 genannten Verbindungen als Verknüpfungsreagenzien bei der Herstellung von Polyestern auf der Basis von Hyxdroxycarbonsäuren.
